# EUROPEAN PATENT SPECIFICATION

(11) **EP 1 233 684 B1**
(45) Date of publication and mention of the grant of the patent: **29.08.2007**
(21) Application number: 00980125.9
(22) Date of filing: 01.12.2000
(51) Int. Cl.: A23P 1/06, A23P 1/14

(54) **METHOD FOR PRODUCING INSTANT POWDER**
VERFAHREN ZUR HERSTELLUNG VON INSTANTPULVER
PROCEDE DE PRODUCTION D'UNE POUDRE INSTANTANEE

(30) Priority: 03.12.1999 NO 995976
(43) Date of publication of application: 28.08.2002
(73) Proprietor: Dtech AS, 7462 Trondheim (NO)
(72) Inventor: STROMMEN, Ingvald, N-7054 Ranheim (NO); EIKEVIK, Trygve, Magne, N-7562 Trondheim (NO); ALVES-FILHO, Odilio, N-7011 Trondheim (NO)
(74) Representative: Rosenquist, Per Olof
(86) International application number: PCT/NO2000/000402
(87) International publication number: WO 2001/039616

(56) References cited:
- RU-C1- 2 115 347
- RU-C1- 2 115 348
- RU-C1- 2 136 182
- SU-A- 1 641 247
- US-A- 5 230 889

## Description

The present invention is related to a method for producing instant powders from foods, berries, fruits and vegetables and a ready to eat porous matrix based on such method. The method also applies in the production of instant powders for different purposes as needed in the biotechnological, chemical, pharmaceutical and medicine processes.

The present invention differs completely from the today's traditional methods. There are basically two traditional ways of producing the powder by either applying high temperature spray dying of liquid droplets or using very low pressure and very low temperature in a vacuum freezing drying of a fixed frozen layer or agitated batch of product. The powders produced by such traditional methods have low quality and properties and normally they require the addition of chemical preservatives. The spray dried powders are difficult to rehydrate due to high temperature exposure. The vacuum freeze dried powders may have non-uniform moisture in product layer and the drying time and operation is long and costly due to the low temperature low pressure employed.

RU-2115347 and RU-2115348 disclose that food products are mixed with carbon dioxide while subjected to pressure and that the mixture is expanded in two stages. Subsequently the product is dried.

The improvements attained in the present invention are the production of innovative instant powders and ready to eat porous matrix which have enhanced nutritional value and improved quality attributes such as rehydration, color, porosity, density, light weight, taste and aroma. This is because the product is expanded and dried at gentile conditions as to maintain or improve its characteristics and the size of the final product can be adjusted for minimum oxidation and color change to light exposure. Moreover, the adjustable size and processing conditions allow the formation of a protective and natural barrier on the surface of the new powders and porous matrix. Therefore, the innovative powders and porous matrix are as healthy and as natural as the original fruits or vegetables since no chemical additives are necessary to preserve them.

This invention provides ready to eat porous matrix (REPM) and instant powders (IP) from foods, berries, fruits and vegetables. The REPM and IP from foods, berries, fruits and vegetables present unique characteristics as being natural products having adjustable color, porosity, texture, shape and size. Several tests were successfully performed for different types of foods, berries, fruits and vegetables and ready to eat porous matrix and instant powder samples of cranberry, banana, kiwi, potato and carrots are now available in our laboratory.

This invention also furnishes the method for preparing the ready to eat porous matrix and for producing the instant powders from foods, berries, fruits and vegetables and production of instant powders from chemical, pharmaceutical, biotechnological and medical products. The preparation of REPM and production of IP from foods, berries, fruits and vegetables are presented in the following paragraph.

The fresh foods, berries, fruits or vegetable preparation comprises peeling, removing seeds and blending it as a homogeneous puree or solution. This same puree or solution is then loaded into a pressurized vessel, after which liquefied carbon dioxide is added. Afterwards a mixing process with a vessel propeller, is activated. Then, the vessel outlet nozzle is directed into a collecting reservoir and discharge valves are gradually opened. As a consequence the mixture is expanded to suitable pressure and temperature and a porous matrix is formed. The collecting reservoir temperature is regulated in accordance to the stability of the incoming matrix.

The matrix produced in this way presents desirable features as being porous, stable and with adjustable size and shape. Also, the procedure permits to control the desirable final product properties including its porosity, color and texture.

Aside from the above mentioned, the matrix has essential characteristics for consumers, such as being a healthy and a natural product with all initial properties or natural chemical and nutritional compounds. Yet, desired ingredients or compounds may be added prior to the mixture expansion. Once the porous matrix is produced, its freezing points, its specific heat and latent enthalpy are determined. The appropriate size is attained by reduction, agglomeration or granulation, prior to drying at atmospheric pressure both below and above the matrix freezing points. Finally, the final product characteristics, quality and properties are measured.

Also the present invention includes the methods for determining the effects of processing conditions on the final product quality and property, e.g., the determination of structural characteristics and measurements of color, hardness, compression strength, density or porosity.

Aiming at giving full account of the state of art involved the basic steps in preparation and production of IP from foods, chemical, pharmaceutical, biotechnological and medical products. This includes the preparation and production of the ready to eat porous matrix (REPM) and the instant powders (IP) from fruits and vegetables are defined in the claim.

This new and innovative method of preparing and production of REPM and IP provides unique final products, with characteristics such as adjustable granule size as to form a protective surface barrier, enhanced nutritional value, high quality and properties, such as light weight, better color, improved taste and healthy and flavour product since no chemical preservatives are added.

## Claims

1. Method for producing instant powders from foods, from chemical, pharmaceutical, biotechnological and medical products, as well as from berries, fruits and vegetables and a ready to eat porous matrix, comprising the steps of
- preparing a homogeneous puree or solution of for example foods, berries, fruit or vegetable,
- insertion of the puree or solution into a vessel for producing a matrix,
- addition of an inert agent,
- activation of a mixing process with a propeller,
- preparation of a collecting reservoir as to be at equilibrium temperature with the incoming matrix,
- opening of valves at the discharge of the pressurized vessel,
- expansion of the mixture into the collecting reservoir,
- freezing of the matrix with size reduction, agglomeration or granulation, thereafter proceeding with drying at atmospheric pressure and below the matrix freezing point and
- drying at atmospheric pressure and above the matrix freezing point, and
- finally measurement of final product characteristics, quality and property.

## Patentansprüche

1. Verfahren zum Herstellen von Fertigpulvern aus Lebensmitteln, aus chemischen, pharmazeutischen, biotechnologischen und medizinischen Produkten, sowie aus Beeren, Fürchten und Gemüse, und einer verzehrfertigen porösen Matrix, umfassend die folgenden Schritte:
- Bereitstellen eines homogenen Pürees oder einer homogenen Lösung aus z. B. Lebensmitteln, Beeren, Früchten oder Gemüse;
- Hineingeben des Pürees oder der Lösung in ein Gefäß zum Herstellen einer Matrix;
- Zugeben eines inerten Wirkstoffs;
- Aktivieren eines Mischprozesses mit einem Propeller;
- Bereitstellen eines Sammelbehälters mit einer Gleichgewichtstemperatur bezüglich der hineinzugebenden Matrix;
- Öffnen von Ventilen an dem Auslass des unter Druck stehenden Gefäßes;
- Expansion des Gemisches in den Sammelbehälter;
- Einfrieren der Matrix bei einer Größenreduktion, Agglomeration oder Granulation, und danach Fortfahren mit einem Trocknen bei Atmosphärendruck und unterhalb des Matrixgefrierpunkts; und
- Trocknen bei Atmosphärendruck und oberhalb des Matrixgefrierpunkts; und
- schließlich Messen von abschließenden Produktcharakteristika, Qualität und Eigenschaft.

## Revendications

1. Procédé de production de poudres instantanées à partir de denrées alimentaires, de produits chimiques, pharmaceutiques, biotechnologiques et médicaux, de même qu'à partir de baies, de fruits et de légumes, et d'une matrice poreuse prête à être mangée, comportant les étapes consistant à :
- préparer une purée ou une solution homogène constituée, par exemple, de denrées alimentaires, de baies, de fruits ou de légumes,
- insérer la purée ou la solution dans une enceinte pour produire une matrice,
- ajouter un agent inerte,
- activer un processus de mélange à l'aide d'un dispositif à hélice,
- préparer un réservoir de réception de façon à se trouver à une température d'équilibre avec la matrice entrante,
- ouvrir des vannes au niveau de l'évacuation de l'enceinte pressurisée,
- étendre le mélange dans le réservoir de réception,
- réfrigérer la matrice avec une réduction de dimension, une agglomération ou une granulation puis traiter en séchant à la pression atmosphérique et au-dessous du point de congélation de la matrice et
- sécher à la pression atmosphérique et au-dessus du point de congélation de la matrice, et
- enfin mesurer les caractéristiques, la qualité et la propriété du produit fini.
